(19) Europäisches Patentamt
European Patent Office
Office européen des brevets

(11) Publication number: **0 259 111 B1**

(12) # EUROPEAN PATENT SPECIFICATION

(45) Date of publication of patent specification: **10.07.91**
(51) Int. Cl.[5]: **C09K 7/06**

(21) Application number: **87307634.3**

(22) Date of filing: **28.08.87**

(54) **Drilling fluids.**

(30) Priority: **02.09.86 US 902772**

(43) Date of publication of application:
**09.03.88 Bulletin 88/10**

(45) Publication of the grant of the patent:
**10.07.91 Bulletin 91/28**

(84) Designated Contracting States:
**CH DE FR GB LI NL SE**

(56) References cited:
**EP-A- 0 072 245**
**EP-A- 0 103 482**
**EP-A- 0 106 529**
**US-A- 4 537 688**

(73) Proprietor: **EXXON RESEARCH AND ENGINEERING COMPANY**
**P.O.Box 390, 180 Park Avenue**
**Florham Park, New Jersey 07932(US)**

(72) Inventor: **Lundberg, Robert Dean**
**4 Brian Drive**
**Bridgewater New Jersey 08807(US)**
Inventor: **Peiffer, Dennis George**
**33 John Drive**
**Annandale New Jersey 08801(US)**
Inventor: **Newlove, John Christopher**
**3222 Lake Stream Drive**
**Kingwood texas 77345(US)**
Inventor: **Werlein, Eugene Richard**
**9602 Barnes Road**
**Simonton Texas 77476(US)**

(74) Representative: **Fletcher Watts, Susan J. et al**
**ESSO Engineering (Europe) Ltd. Patents & Licences Mailpoint 72 Esso House Ermyn Way**
**Leatherhead, Surrey KT22 8XE(GB)**

**EP 0 259 111 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to oil-based drilling muds useful, for example, in the drilling operations of or for gas and oil wells. More especially the invention is concerned with drilling muds containing an ionomeric system as a, or the, viscosification agent. Such systems are known, for example from US-A 4425461; US-A 4537688; US-A 4425455; and EP-0072245 A1.

There is continued need for oil-based drilling muds of improved rheological properties and it is one aim of the invention to provide an improved drilling mud.

According to the present invention an oil-based drilling mud comprises:

(a) a hydrocarbon liquid substantially immiscible with water;

(b) about 1 to about 10 parts by weight of water per 100 parts by weight of the hydrocarbon liquid;

(c) about 0.05 to 0.14 kg/l (about 20 to about 50 lb/bbl) of at least one emulsifier;

(d) weighting material in amount to achieve a desired drilling mud density; and

(e) about 0.0007 to about 0.017 kg/l (about 0.25 to about 6.0 lb/bbl) of a neutralized sulfonated thermoplastic terpolymer having an Mn of about 5,000 to about 200,000 said neutralized sulfonated thermoplastic polymer having about 5 to about 100 meq. of metal, amine or ammonium neutralized sulfonate groups per 100 grams of the neutralized sulfonated thermoplastic terpolymer, wherein said sulfonated thermoplastic terpolymer is a p-methylstyrene/metal neutralized styrene sulfonate/styrene terpolymer formed by a free radical emulsion polymerization.

The oil employed in the oil-based drilling mud is generally a No.2 diesel fuel, but it can be other commercially available hydrocarbon solvents such as kerosene, fuel oils or selected crude. If crudes are used, they should be weathered and must be free of emulsion breakers.

Typical, but non-limiting examples of suitable emulsifiers which can be readily employed are magnesium or calcium soaps of fatty acids.

Typical, but non-limiting examples of suitable wetting agents which can be readily employed are alkylaryl sulfonates.

Typical, but non-limiting examples of a weighting material which can be readily employed is barite or a barium sulfate which may optionally be surface-treated with other cations, such as calcium.

The water employed may be, for example, fresh water or salt water.

The drilling mud of the invention may also contain a wetting agent, for example, an alkylaryl sulfonate. A preferred quantity is 0.001 to 0.014 kg/l (0.5 to 5 lb/bbl).

In general, the oil-based drilling mud has a specific gravity of 0.8 to 2.4 kg/l (7 pounds per gallon to 20 pounds per gallon) more preferably 1.4 to 1.9 kg/l (12 to 16).

A preferred oil-based drilling mud of the invention contains 3 to 5 parts by weight of water by weight of the oil.

The preferred weighting material is barium sulfate or barite. The quantity normally necessary to give the desired mud density is less than 2.2 kg/l (800 lb/bbl) of barium sulfate, more preferably 0.014 to 2.14 kg/l (5 to 750) and most preferably 0.03 to 2.0 kg/l (10 to 700).

Preferably 0.07 to 0.01 kg/l (0.25 to 4 lb/bbl) of the neutralized sulfonated terpolymer is employed.

The neutralized sulfonate-containing terpolymers are formed by a free radical copolymerization process. In general, the styrene, p-methylstyrene and sulfonate-containing styrene monomers are dispersed in a water phase in the presence of an initiator and a suitable surfactant, at a temperature sufficient to initiate polymerization.

The resultant product is normally in latex form. In use, it is added to the drilling mud formulation at about 0.05 to 0.14 kg/l (0.5 to 20 lb/bbl), the latex containing 20 to 50 weight percent of the sulfonate-containing polymer.

The sulfonate-containing polymers formed from the free radical emulsion copolymerization process can be generally described as having an Mn as measured by GPC of 5,000 to 200,000, more preferably 10,000 to 100,000. The sulfonate-containing polymers contain about 5 to 100 meq. of sulfonate groups per 100 grams of polymer, preferably 18 to 100, more preferably 18 to 90, and most preferably 20 to 80. The sulfonate-containing terpolymer which is formed by the free radical emulsion copolymerization process is a p-methylstyrene/styrene/metal (for example sodium)-neutralized styrene sulfonate terpolymer.

The (normally solid) sulfonated thermoplastic terpolymers used in the invention preferably comprise less than 99 percent by weight of styrene, at least 1% by weight of p-methyl styrene and a minor proportion of a metal or amine neutralized sulfonate monomer characterized by the formulae:

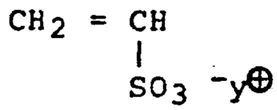

or

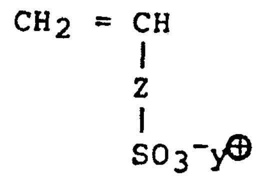

wherein Z is ∅ or

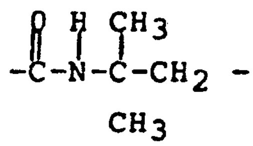

and wherein Y⊕ is a metal cation, preferably selected from antimony, iron, aluminium and Groups IA, IIA, IB and IIB of the Periodic Table, or ammonium, or an amine of the formula:

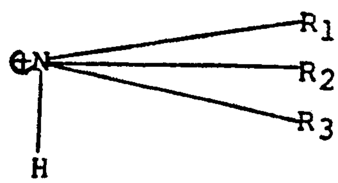

where $R_1$, $R_2$ and $R_3$ an be aliphatic groups of $C_1$ to $C_{12}$ or hydrogen, the terpolymer being water insoluble having 5 to 100 meq. of sulfonate groups per 100 grams. Particularly suitable metal cations are sodium, potassium and zinc, and an especially preferred metal cation is sodium. A typical, but non-limiting example of suitable sulfonate-containing monomers is:

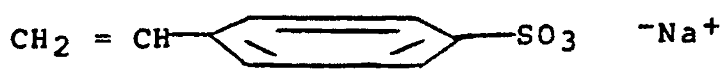

sodium styrene sulfonate.

The sulfonate-containing monomers used in the invention, which are water soluble can be generally described as a monomer having unsaturation and a metal, amine or ammonium sulfonate group.

An especially preferred sulfonate-containing monomer is metal styrene sulfonate. The molar ratio of sulfonate-containing monomer to p-methyl styrene and styrene preferably is 1/200 to 1/5, more preferably 1/150 to 1/6, and most preferably 1/100 to 1/9.

The sulfonated thermoplastic terpolymers formed from the free radical emulsion copolymerization process preferably contain 5 to 90 mole % of p-methylstyrene groups, more preferably 10 to 75 mole %, and most preferably 20 to 45 mole %.

In general, in preparing the terpolymers the p-methyl styrene with styrene and sulfonate-containing monomer are dispersed in a water phase in the presence of a suitable free radical initiator and a suitable surfactant, wherein the temperature is sufficient to initiate polymerization. The resultant latex is coagulated, usually by the addition of an aqueous salt solution, and the recovered terpolymer is washed with water and subsequently dried under vacuum at room temperature. Alternatively, the latex can be coagulated by the addition of methanol.

A variety of free radical catalysts can be employed in preparing the terpolymers, including the water-soluble varieties, potassium persulfate, ammonium persulfate, etc and the oil/water soluble redox couples such as benzoyl peroxide/$(NH_4)_2FeSO_4$.

The surfactants which may be employed in preparing the terpolymers are varied and well-known in the art. The typical emulsifiers or surfactants can be employed; however, some are more effective than others in generating lattices of better stability. A preferred emulsifier is sodium lauryl sulfate.

Buffering agents can be used, but are not essential, in the polymerization process. If used, they are

normally selected from sodium carbonate, ammonia, sodium acetate, trisodium phosphate, etc. Buffering agents are preferably employed at a concentration of 0.1 to 5 grams per 100 grams water employed in the emulsion system.

Chain transfer agents can be readily employed in the instant polymerization process for controlling the molecular weight of the resultant terpolymer. The concentration of chain transfer agent is from 0 to 1.0 grams per 100 grams of the combined weight of the sulfonate-containing monomer and the styrene and t-butyl styrene monomers.

The free radical emulsion copolymerization of the water soluble sulfonate-containing monomer, water-insoluble styrene and the p-methylstyrene monomers yields a stable latex, wherein the resultant water insoluble terpolymer is not covalently cross-linked, and possesses substantial ionic cross-linking, and has 5 to 100 meq. of sulfonate groups per 100 grams of polymer, more preferably 18 to 90. The resultant latex can be coagulated by the addition of an aqueous salt solution to the emulsion at a volume ratio of the aqueous salt solution to total volume of the emulsion of 10 to 0.5, more preferably 3 to .7, and most preferably 2 to 1. The water insoluble terpolymer is recovered by filtration and substantially washed with water and dried under vacuum conditions. Alternatively, the polymer can be coagulated by precipitation with alcohol such as methanol.

In the following examples, Nos. 1 to 4 illustrate preparation of terpolymers for use in the invention and Nos. 5 and 6 non-limitatively exemplify drilling muds of the invention.

Example 1

The terpolymer lattices are prepared by emulsion techniques that allow incorporation of sodium styrene sulfonate into styrene and methylstyrene to form the ion-containing material. A representative example is outlined below.

Into a four-neck flask, we add:
31.2 styrene (95 mole%)
19.0g p-methylstyrene (5 mole %); PMS
120 ml. distilled water
2.0g sodium styrene sulfonate
3.2g sodium lauryl sulfate
0.2g potassium persulfate
0.05g dodecylthiol
The dodecylthiol is a chain transfer agent used to control molecular weight. The flask is flushed with nitrogen, vigorously stirred and heated to 50°C for 24 hours. The resulting stable emulsion, containing approximately 35 mole % PMS, was short stopped with hydroquinone and cooled to room temperature. This emulsion was used directly in the drilling fluid formulation (designated 113A).

Example 2

The level of para-methylstyrene in the polymer can be modified through changes in the concentration of the monomer in the initial polymerizing mixture. For example, a terpolymer containing approximately 50 mole % p-methylstyrene (PMS) is formed with only a relatively small change in the styrene and PMS monomer concentration in the previously described (Example 1) formulation. This is:
23.7g styrene (50 mole %)
27.0g p-methylstyrene (30 mole %)

Again, the resultant latex solution is used directly in the drilling fluid formulation (designated 113B).

Example 3

The level of para-methyl styrene in the polymer can be again modified through changes in the concentration of the monomer in the initial polymerizing mixture. For example, a terpolymer containing approximately 25 mole % p-methylstyrene is formed with only a modest change in the styrene and PMS monomer concentration as in the previously described (Example 1) formulation. That is:
11.3g styrene (25 mole %)
39.0g p-methylstyrene (75 mole %)

Again, the resultant latex solution is used directly in the drilling fluid formulation (designated 113C).

Example 4

The level of para-methyl styrene in the polymer can be again modified through changes in the concentration of the monomer in the initial polymerizing mixture. For example, a terpolymer containing 100 mole % p-methylstyrene (PMS) is formed with change in the PMS monomer concentration in the previously described (Example 1) formulation. That is:

50.0 p-methylstyrene (100 mole %)

Again, the resultant latex solution is used directly in the drilling fluid formulation (designated 113D).

Example 5

An oil-based drilling mud was prepared by conventional laboratory methods. The mud contained #2 diesel oil, fresh or calcium chloride water, emulsifier, supplementary emulsifier, a wetting agent, sulfonated styrene: styrene: para-methyl styrene terpolymer and weighting material. The mud was aged at 300 °F (149 °C) for 21 hours and 4 days at room temperature. The cells were cooled to room temperature, depressurized and then the rheological properties of the mud were measured on a Fann Model 35 viscometer at 115 °F (46 °C). It should be noted that these terpolymers were evaluated in "oilfaze" mud systems at 12 lb./gal (1.44 kg/l).

Table 1 shows the effectiveness of the four sulfonated terpolymers (described in Examples 1-4) in an oil mud system. These results are directly compared with the base mud (control) and a mud containing sulfonated polystyrene (SPS).

The overall rheological properties of the muds containing para-methylstyrene ionomers are improved over a broad temperature range, i.e. up to at least 450 °F (at least 230 °C), as compared with the base mud and muds containing SPS. We believe this is due to the improved solubility of the terpolymer ionomer in the oil phase.

In Table I:-

E.S. = Electric Stability (volts)
F.L. = Fluid Loss (ml/30 min)
A.V. = Apparent Viscosity (centipoise)
P.V. = Plastic Viscosity (centipoise), being the difference between the 600 rpm and 300 rpm measurements.
Y.P. = Yield point (lb/100 $ft^2$), being the difference between the 300 rpm measurement and the plastic viscosity.

TABLE I

PARA-METHYLSTYRENE TERPOLYMER IONOMER/OIL MUD RHEOLOGY*

| Rheology (115°F) (46°C) | Control | SPS | Ex.1 | Ex.2 | Ex.3 | Ex.4 |
|---|---|---|---|---|---|---|
| 600 rpm | 75 | 110 | 148 | 146 | 130 | 134 |
| 300 " | 46 | 72 | 100 | 98 | 86 | 88 |
| 200 " | 36 | 57 | 82 | 80 | 69 | 71 |
| 100 " | 24 | 39 | 58 | 57 | 48 | 49 |
| 6 " | 7 | 14 | 26 | 25 | 20 | 18 |
| 3 " | 6 | 13 | 24 | 23 | 18 | 16 |
| 10 Sec. Gel. | 8 | 18 | 28 | 28 | 24 | 18 |
| E.S. | 400 | | 600 | | 560 | |
| F.L. | 0.0 | 3.1 | 22.6 | 9.9 | 13.7 | 0.0 |
| AV | 37 | 55 | 74 | 73 | 65 | 67 |
| PV | 29 | 38 | 48 | 48 | 44 | 46 |
| YP | 17 | 34 | 52 | 50 | 42 | 42 |

*Aged 21 hours at 300°F (149°C) and 4 days at room temperature. Polymer concentration is 2.0 lbs./BBL (0.0057 kg/1).

Example 6

Below in Table II is a direct comparison of oil mud rheology of paramethylstyrene terpolymer isomers with other ionomeric systems. It is readily observed that the ionomeric-containing muds have markedly improved rheological performance as compared with the base control mud and that the paramethylstyrene terpolymer ionomer has significantly improved properties in comparison with the other elastomeric and thermoplastic ionomers measured under essentially the identical experimental conditions. These improved properties are sustained over a very broad temperature range.

In Table II, the measurements taken are as described in Example 5.

**TABLE II**

**COMPARISON OF PARA-METHYLSTYRENE TERPOLYMER IONOMER/OIL MUD RHEOLOGY WITH THE PRIOR ART**

| Rheology (115°F)(46°C) | Control | SPS | A(1) | B(2) | C(3) | D(4) | PMS(5) |
|---|---|---|---|---|---|---|---|
| 600 rpm | 75 | 110 | 107 | 49 | | 47 | 148 |
| 300 " | 46 | 72 | 71 | 27 | | 25 | 100 |
| 200 " | 36 | 57 | | | | | 36 |
| 100 " | 24 | 39 | | | | | 24 |
| 6 " | 7 | 14 | | | | | 26 |
| 3 " | 6 | 13 | | | | | 24 |
| 10 Sec. Gel | 8 | 18 | 26 | 4 | 12 | 9 | 28 |
| E.S. | 400 | | | | | | 600 |
| F.L. | 0.0 | 3.1 | | | | | 22.6 |
| AV | 37 | 55 | | | | | 74 |
| PV | 29 | 38 | 36 | 22 | 41 | 22 | 48 |
| YP | 17 | 34 | 35 | 5 | 27 | 3 | 52 |

(1) Turner, et al., U. S. Patent No. 4,425,461
(2) European Patent 0072245
(3) Peiffer, et al., U. S. Patent No. 4,537,688
(4) Turner, et al., U. S. Patent No. 4,425,455
(5) Exp. 1 from Table I

## Claims

1. An oil-based drilling mud which comprises:
   (a) a hydrocarbon liquid substantially immiscible with water;
   (b) about 1 to about 10 parts by weight of water per 100 parts by weight of the hydrocarbon liquid;
   (c) about 0.05 to 0.14 kg/l (about 20 to about 50 lb/bbl) of at least one emulsifier;
   (d) weighting material in amount to achieve a desired drilling mud density; and
   (e) about 0.0007 to about 0.017 kg/l (about 0.25 to about 6.0 lb/bbl) of a neutralized sulfonated thermoplastic terpolymer having an Mn of about 5,000 to about 200,000 said neutralized sulfonated thermoplastic polymer having about 5 to about 100 meq. of metal, amine or ammonium neutralized sulfonate groups per 100 grams of the neutralized sulfonated thermoplastic terpolymer, wherein said sulfonated thermoplastic terpolymer is a p-methylstyrene/metal neutralized styrene sulfonate/styrene terpolymer formed by a free radical emulsion polymerization.

2. A drilling mud according to claim 1 wherein the sulfonate groups of said neutralized sulfonated thermoplastic terpolymer are neutralized with a counterion selected from antimony, iron, aluminium, lead and Groups IA, IIA, IB and IIB of the Periodic Table of Elements.

3. A drilling mud according to claim 2, wherein counterion is selected from zinc, magnesium and sodium.

4. A drilling mud according to any preceding claim, further including a wetting agent, preferably an alkylaryl sulfonate.

5. A drilling mud according to any preceding claim, wherein said weighting material is barite or barium sulfate.

6. A drilling mud according to any preceding claim, wherein said weighting material is present in amount to give the drilling mud a specific gravity of about 0.84 kg/l (about 7 pounds per gallon) to about 2.4 kg/l (about 20 pounds per gallon).

7. A drilling mud according to any preceding claim, wherein said hydrocarbon liquid is an oil.

8. A drilling mud according to any one of claims 1 to 7, wherein said hydrocarbon liquid is a hydrocarbon solvent.

9. A drilling mud according to any preceding claim, wherein said emulsifier is a magnesium or calcium soap of a fatty acid.

10. A drilling mud according to any preceding claim, which further includes a polar cosolvent.

**Revendications**

1. Boue de forage à base d'huile,qui comprend:
   (a) un liquide hydrocarboné essentiellement non miscible à l'eau;
   (b) environ 1 à environ 10 parties en poids d'eau pour 100 parties en poids du liquide hydrocarboné ;
   (c) environ 0,05 à 0,14 kg/l ( environ 20 à environ 50 livres par baril) d'au moins un émulsifiant ;
   (d) de la matière alourdissante,(présente) en une quantité permettant d'obtenir une densité voulue de la boue de forage; et
   (e) environ 0,0007 à environ 0,017 kg/l ( environ 0,25 à environ 6,0 livre par baril) d'un terpolymère thermoplastique sulfoné neutralisé ayant une Mn d'environ 5 000 à environ 200 000 , ledit polymère thermoplastique sulfoné neutralisé comportant environ 5 à environ 100 milliéquivalents de groupes sulfonates neutralisés par un métal,une amine ou un groupe ammonium, pour 100 grammes du terpolymère thermoplastique sulfoné neutralisé , ledit terpolymère thermoplastique sulfoné étant un terpolymère p-méthylstyrène/ styrène sulfonate neutralisé par un métal/styrène formé par une polymérisation en émulsion sous l'effet de radicaux libres (polymérisation radicalaire) .

2. Boue de forage selon la revendication 1 , dans laquelle les groupes sulfonates dudit terpolymère thermoplastique sulfoné neutralisé sont neutralisés par un ion antagoniste choisi parmi l'antimoine, le fer , l'aluminium, le plomb et (des éléments) des Groupes IA, IIA IB et IIB du Tableau Périodique des

Eléments .

3. Boue de forage selon la revendication 2 , dans laquelle l'ion antagoniste est choisi parmi le zinc,le magnésium et le sodium.

4. Boue de forage selon l'une quelconque des revendications précédentes, comprenant en outre un mouillant ,de préférence un alkylaryl sulfonate .

5. Boue de forage selon l'une quelconque des revendications précédentes , dans laquelle ladite matière alourdissante est de la baryte ou du sulfate de baryum .

6. Boue de forage selon l'une quelconque des revendications précédentes , dans laquelle ladite matière alourdissante est présente en une quantité permettant de conférer à la boue de forage une masse volumique d'environ 0,84 kg/l (environ 7 livres par gallon) à environ 2,4 kg/l (environ 20 livres par gallon).

7. Boue de forage selon l'une quelconque des revendications précédentes, dans laquelle ledit liquide hydrocarboné est une huile.

8. Boue de forage selon l'une quelconque des revendications 1 à 7 , dans laquelle ledit liquide hydrocarboné est un solvant hydrocarboné .

9. Boue de forage selon l'une quelconque des revendications précédentes , dans laquelle ledit émulsifiant est un savon de magnésium ou de calcium d'un acide gras .

10. Boue de forage selon l'une quelconque des revendications précédentes , qui comprend en outre un cosolvant polaire .

**Ansprüche**

1. Bohrschlamm auf Ölbasis, der
   a) eine mit Wasser im wesentlichen nicht mischbare Kohlenwasserstoffflüssigkeit,
   b) etwa 1 bis etwa 10 Gewichtsteile Wasser pro 100 Gewichtsteile der Kohlenwasserstoffflüssigkeit,
   c) etwa 0,05 bis 0,14 kg/l (etwa 20 bis etwa 50 lb/bbl) mindestens eines Emulgators,
   d) Beschwerungsmittel in einer solchen Menge, daß eine gewünschte Bohrschlammdichte erzielt wird, und
   e) etwa 0,0007 bis etwa 0,017 kg/l (etwa 0,25 bis etwa 6,0 lb/bbl) eines neutralisierten, sulfonierten, thermoplastischen Terpolymeren mit einem $M_n$ von etwa 5000 bis etwa 200 000 umfaßt,, wobei das neutralisierte, sulfonierte, thermoplastische Polymer etwa 5 bis etwa 100 Milliäquivalente von mit Metall, Amin oder Ammonium neutralisierte Sulfonatgruppen pro 100 g des neutralisierten, sulfonierten, thermoplastischen Terpolymeren aufweist und das sulfonierte, thermoplastische Terpolymer ein p-Methylstyrol/Metall-neutralisiertes Styrol-sulfonat/Styrol-Terpolymer ist, das durch eine freiradikalische Emulsionspolymerisation gebildet worden ist.

2. Bohrschlamm nach Anspruch 1, bei dem die Sulfonatgruppen des neutralisierten, sulfonierten, thermoplastischen Terpolymeren mit einem Gegenion ausgewählt aus Antimon, Eisen, Aluminium, Blei und den Gruppen Ia, IIa, Ib und IIb des Periodensystems der Elemente neutralisiert sind.

3. Bohrschlamm nach Anspruch 2, bei dem das Gegenion ausgewählt ist aus Zink, Magnesium und Natrium.

4. Bohrschlamm nach einem der vorhergehenden Ansprüche, der außerdem ein Benetzungsmittel, vorzugsweise ein Alkylarylsulfonat, enthält.

5. Bohrschlamm nach einem der vorhergehenden Ansprüche, bei dem das Beschwerungsmittel Schwerspat oder Bariumsulfat ist.

6. Bohrschlamm nach einem der vorhergehenden. Ansprüche, bei dem das Beschwerungsmittel in einer

solchen Menge vorhanden ist, daß der Bohrschlamm ein spezifisches Gewicht von etwa 0,84 kg/l (etwa 7 pounds per gallon) bis etwa 2,4 kg/l (etwa 20 pounds per gallon) erhält.

**7.** Bohrschlamm nach einem der vorhergehenden Ansprüche, bei dem die Kohlenwasserstoffflüssigkeit ein Öl ist.

**8.** Bohrschlamm nach einem der Ansprüche 1 bis 7, bei dem die Kohlenwasserstoffflüssigkeit ein Kohlenwasserstofflösungsmittel ist.

**9.** Bohrschlamm nach einem der vorhergehenden Ansprüche, bei dem der Emulgator eine Magnesium- oder Calciumseife einer Fettsäure ist.

**10.** Bohrschlamm nach einem der vorhergehenden Ansprüche, der außerdem ein polares Colösungsmittel enthält.